# EUROPÄISCHE PATENTANMELDUNG

(11) **EP 3 340 196 A1**
(43) Veröffentlichungstag der Anmeldung: **27.06.2018**
(21) Anmeldenummer: 16206678.1
(22) Anmeldetag: 23.12.2016
(51) Int. Cl.: G07F 13/06, G07F 17/00, G07F 7/10, G07F 9/02, G06Q 20/40, G06Q 20/32, A47J 31/40, A47J 31/44

(54) **VERFAHREN ZUM BETRIEB EINER GETRÄNKEZUBEREITUNGSMASCHINE, GETRÄNKEZUBEREITUNGSMASCHINE UND COMPUTERPROGRAMM**

(71) Anmelder: Qbo Coffee GmbH, 8304 Wallisellen (CH)
(72) Erfinder: HARTMANN, Doreen, 02827 Görlitz (DE); LEE, Hosun, 22763 Hamburg (DE); FRANKE, Dominik, 8306 Brüttisellen (CH)
(74) Vertreter: Frei Patent Attorneys

(57) **Zusammenfassung**

Ein Verfahren zum Betrieb einer Getränkezubereitungsmaschine (1), zur Herstellung eines Gesamtproduktes unter Verwendung einer Portionspackung (3), weist die folgenden durch die "Getränkezubereitungsmaschine (1) ausgeführten Schritte auf:
• einen Empfangsschritt (81) zum Empfangen, durch eine Kommunikationseinheit (15), eines Auslösebefehls zum Auslösen einer bestimmten Aktion in der Getränkezubereitungsmaschine 1, und von Authentifizierungsinformation;
• einen Überprüfungsschritt (82) zum Überprüfen, anhand der Authentifizierungsinformation, ob der Auslösebefehl von einem Bediengerät (4a, 4b, 4c) stammt, welches zum Auslösen dieser bestimmten Aktion in der Getränkezubereitungsmaschine (1), insbesondere dem Fern-Auslösen einer Herstellung berechtigt ist;
und, nur im Falle, dass das Bediengerät dazu berechtigt ist:
• Ausführen der Aktion, insbesondere eines Herstellungsschritts (85) zum Herstellen des Gesamtproduktes.

## Beschreibung

Die Erfindung betrifft Getränkezubereitungsmaschinen zum Zubereiten von Getränken oder dergleichen aus einer Portionspackung mit einer Portionsverpackung (bspw. Kapsel) und einem in der Portionsverpackung enthaltenen Extraktionsgut (bspw. Kaffee). Sie betrifft insbesondere ein Verfahren zum Betrieb einer Getränkezubereitungsmaschine, eine Getränkezubereitungsmaschine und ein Computerprogramm zum Betrieb eines Bediengerätes.

Getränkezubereitungsmaschinen zum Zubereiten von Getränken oder dergleichen aus einem in einer Portionsverpackung vorhandenen Extraktionsgut sind beispielsweise als Kaffee- oder Espressomaschinen bekannt. In vielen entsprechenden Systemen sind die Portionsverpackungen als Kapsel ausgebildet, in denen das Extraktionsgut bspw. luftdicht abgeschlossen ist. Für die Extraktion wird die Kapsel in einer Kapselaufnahme platziert und angestochen, beispielsweise an zwei einander gegenüberliegenden Seiten. Auf der ersten Seite wird dann eine Extraktionsflüssigkeit - im Allgemeinen heisses Wasser - eingeleitet. Auf der zweiten Seite wird das Extraktionsprodukt aus der Kapsel ausgeleitet. Dies geschieht in einem sogenannten Brühmodul.

Neben einem Brühmodul können eine oder mehrere weitere Einheiten zum Fördern und Beifügen einer weiteren Getränkekomponente wie beispielsweise Milch vorliegen. So kann die Getränkezubereitungsmaschine ein Getränk oder allgemein gesprochen ein Gesamtprodukt aus zwei Teilprodukten herstellen.

Die europäische Patentanmeldung Nr. 15 194 735 beschreibt ein Verfahren zum Betrieb einer Getränkezubereitungsmaschine zum Herstellen eines Produktes aus mehreren Teilprodukten, wobei Mengenanteile der Teilprodukte durch einen Benutzer auf einer grafischen Anzeige der Mengenanteile angepasst werden können.

Die europäische Patentanmeldung Nr. 15 194 667 beschreibt ein Verfahren zum Betrieb einer Getränkezubereitungsmaschine unter Verwendung von Zubereitungsparametern, die anhand eines Portionencodes einer Portionspackung bestimmt werden. Dabei sind einzelne Zubereitungsparameter durch einen Benutzer anpassbar.

In den oben genannten Patentanmeldungen ist unter anderem die Option einer Kommunikation der Getränkezubereitungsmaschine mit einem Bediengerät beschrieben, welches mobil und tragbar sein kann, beispielsweise ein Mobiltelefon oder Smartphone. Mit dem Bediengerät können **Zubereitungsvorschriften** oder Rezepte an die Getränkezubereitungsmaschine übermittelt werden, oder Zubereitungsvorschriften, welche in der Getränkezubereitungsmaschine gespeichert sind, können modifiziert werden. Es ist vorgesehen, dass die Zubereitung durch einen Bedienschritt ausgelöst wird, der durch den Benutzer an der Getränkezubereitungsmaschine selber ausgeführt wird.

Es ist eine mögliche Aufgabe der Erfindung, eine für einen Benutzer bequeme und gleichzeitig sichere Bedienung der Getränkezubereitungsmaschine zu realisieren, und ein entsprechendes Verfahren zum Betrieb einer Getränkezubereitungsmaschine, eine Getränkezubereitungsmaschine und ein Computerprogramm zu schaffen, welche diese Realisierung ermöglichen.

Es ist eine weitere mögliche Aufgabe der Erfindung, einem Benutzer die Bedienung einer Getränkezubereitungsmaschine zu erleichtern.

Diese Aufgabe lösen ein Verfahren zum Betrieb einer Getränkezubereitungsmaschine, eine Getränkezubereitungsmaschine und ein Computerprogramm gemäss den Patentansprüchen.

Das Verfahren dient also zum Betrieb einer Getränkezubereitungsmaschine, zur Herstellung eines Gesamtproduktes unter Verwendung einer Portionspackung, wobei die Getränkezubereitungsmaschine eine zur drahtlosen Kommunikation ausgebildete Kommunikationseinheit aufweist, und wobei das Verfahren mindestens die folgenden durch die Getränkezubereitungsmaschine ausgeführten Schritte aufweist:
- einen Empfangsschritt zum Empfangen, durch die Kommunikationseinheit, eines Auslösebefehls zum Auslösen einer bestimmten Aktion in der Getränkezubereitungsmaschine, und von Authentifizierungsinformation;
- einen Überprüfungsschritt zum Überprüfen, anhand der Authentifizierungsinformation, ob der Auslösebefehl von einem Bediengerät stammt, welches zum Auslösen dieser bestimmten Aktion in der Getränkezubereitungsmaschine, insbesondere dem Fern-Auslösen einer Herstellung berechtigt ist;
und, nur im Falle, dass das Bediengerät dazu berechtigt ist:
- Ausführen der Aktion, insbesondere eines Herstellungsschritt zum Herstellen des Gesamtproduktes.

In einer Ausführungsform wird die Authentifizierungsinformation in Form eines Passwortes übermittelt. Dies kann ein bekanntes PAP ("Password Authentication Protocol") sein. Das Passwort kann dabei stets das gleiche sein, oder es kann systematisch geändert werden.

In einer Ausführungsform wird die Authentifizierungsinformation in einem mehrschrittigen Verfahren ermittelt, in welchem die Getränkezubereitungsmaschine und das Bediengerät Nachrichten austauschen. Dies kann ein bekanntes CHAP ("Challenge-handshake authentication protocol") sein.

In einer Ausführungsform wird die Authentifizierungsinformation in einem anderen weiteren Verfahren ermittelt, beispielsweise einem EAP ("Extensible Authentication Protocol")-Verfahren, einem zertifkatsbasierten kryptographische Verfahren, oder einem Verfahren, welches einen Authentifizierungsserver nutzt, wie beispielsweise Kerberos.

Die **Authentifizierungsinformation** repräsentiert die Tatsache, dass ein Bediengerät eine bestimmte Identität hat, oder zu einer bestimmten Gruppe von Bediengeräten gehört. Typischerweise ist eine Authentifizierungsinformation, und damit eine Identität oder eine Gruppenzugehörigkeit eines Bediengerätes, jeweils bestimmten Berechtigungen oder Berechtigungsstufen zugeordnet. Solche Berechtigungen können definieren, welche **Aktionen** ein Bediengerät in der Getränkezubereitungsmaschine auslösen kann. Aktionen können Maschinen-Aktionen sein, bei welchen eine Produktionseinheit der Getränkezubereitungsmaschine (beispielsweise eine Grundeinheit oder eine Zusatzeinheit) angesteuert werden, beispielsweise durch Betreiben von Aktuatoren oder Hardwareeinheiten wie Pumpen, Heizelementen, Ventilen etc. zum Herstellen eines Produktes oder zum Reinigen der Maschine. Aktionen können auch das Lesen oder Schreiben von Daten, die in der Getränkezubereitungsmaschine gespeichert sind, sein.

Eine **Berechtigung** kann beispielsweise eine Tabelle sein, welche für eine oder mehrere Aktionen jeweils einen zugeordneten logischen Wert "wahr" oder "falsch" aufweist, welcher ausdrückt, ob die Aktion ausgeführt werden darf. Eine Berechtigung kann aber auch implizit respektive prozedural implementiert und in der Getränkezubereitungsmaschine gespeichert sein, beispielsweise durch ein Programm, welches eine Variable, welche eine Berechtigung darstellt (beispielsweise mit Werten wie "obere Stufe" oder "untere Stufe"), verarbeitet und entsprechend dem Wert dieser Variable verzweigt und dadurch eine Aktion ausführt oder nicht.

In Ausführungsformen ist die Getränkezubereitungsmaschine zur drahtlosen Kommunikation mit mehreren Bediengeräten konfigurierbar, wobei diesen Bediengeräten unterschiedliche Berechtigungen zugeordnet sind, und Aktionen der Getränkezubereitungsmaschine durch ein Bediengerät nach Massgabe der diesem Bediengerät zugeordneten Berechtigung auslösbar oder nicht auslösbar sind.

In Ausführungsformen weist der Überprüfungsschritt die folgenden in der Getränkezubereitungsmaschine durchgeführten Schritte auf:
- Ermitteln, anhand der Authentifizierungsinformation, einer Berechtigung, welche dieser Authentifizierungsinformation zugeordnet ist;
- Überprüfen, ob diese Berechtigung das Auslösen der bestimmten Aktion, insbesondere das Fern-Auslösen einer Herstellung, zulässt.

Das Ermitteln der Berechtigung anhand der Authentifizierungsinformation kann geschehen, indem die Authentifizierungsinformation mit einer oder mehreren Authentifizierungsinformationen verglichen werden, die in der Getränkezubereitungsmaschine gespeichert sind, und welchen jeweils eine Berechtigung zugeordnet ist. Diese Zuordnung kann in der Getränkezubereitungsmaschine in verschiedener Weise realisiert sein, beispielsweise in einer Liste, welche mehrere Paare von Authentifizierungsinformationen und Berechtigungen enthält, womit also durch jedes der Paare einer Authentifizierungsinformation eine Berechtigung zugeordnet ist. Die Zuordnung kann alternativ auch geschehen, indem jeder Berechtigung eine Liste von Authentifizierungsinformationen zugeordnet ist. Auch damit ist jeder Authentifizierungsinformation eine Berechtigung zugeordnet.

In Ausführungsformen sind mindestens eine obere Berechtigung und ein untere Berechtigung in der Getränkezubereitungsmaschine gespeichert, und ist die Getränkezubereitungsmaschine zum Ausführen von Maschinen-Aktionen mittels Aktuatoren der Getränkezubereitungsmaschine vorgesehen, wobei
- nur die obere Berechtigung beinhaltet, dass **mindestens eine** Maschinen-Aktion, insbesondere ein Herstellungsschritt, ausgelöst werden darf;
- die untere Berechtigung beinhaltet, dass **keine** Maschinen-Aktion, insbesondere ein Herstellungsschritt, ausgelöst werden darf.

Damit ist es möglich, unterschiedlichen Bediengeräten solche unterschiedlichen Berechtigungen zuzuordnen, was zur Folge hat, dass Bediengeräte mit einer oberen Berechtigung zum Auslösen von Maschinen-Aktionen berechtigt sind, und solche mit einer unteren Berechtigung nicht.

In Ausführungsformen ist zusätzlich mindestens eine mittlere Berechtigung in der Getränkezubereitungsmaschine speicherbar, wobei
- nur die obere Berechtigung auch beinhaltet, dass eine Aktion zum neu Erstellen oder zum Ändern einer mittleren Berechtigung ausgelöst werden darf;
- die mittlere Berechtigung beinhaltet, dass **mindestens eine** Maschinen-Aktion, insbesondere ein Herstellungsschritt, ausgelöst werden darf;

In Ausführungsformen liegen dabei genau drei (oder genau zwei, wenn keine mittlere Berechtigung vorhanden ist) Berechtigungen vor. In anderen Ausführungsformen liegen Gruppen mit jeweils mehreren unteren, mittleren oder oberen Berechtigungen vor. Dabei sind die Berechtigungen einer bestimmten Gruppe bezüglich der oben erwähnten Maschinen-Aktionen und dem Erstellen oder Ändern von mittleren Berechtigungen gleich, aber können sich bezüglich anderer Aktionen unterscheiden.

In Ausführungsformen wird beim Erstellen einer mittleren Berechtigung diese zusammen mit einer zugeordneten Authentifizierungsinformation in der Getränkezubereitungsmaschine gespeichert.

In Ausführungsformen wird durch ein erstes Bediengerät das Erstellen einer mittleren Berechtigung für ein zweites Bediengerät durchgeführt, wobei die folgenden Schritte ausgeführt werden:
- das erste Bediengerät kommuniziert mit der Getränkezubereitungsmaschine respektive deren Kommunikationseinheit und löst in der Getränkezubereitungsmaschine das Erstellen einer mittleren Berechtigung aus, wobei dieser mittleren Berechtigung in der Getränkezubereitungsmaschine eine Basis-Authentifizierungsinformation zugeordnet wird;
- das erste Bediengerät übermittelt dem zweiten Bediengerät eine Remote-Authentifizierungsinformation, welche dem zweiten Bediengerät erlaubt, sich bei der Getränkezubereitungsmaschine anhand der in der Getränkezubereitungsmaschine gespeicherten Basis-Authentifizierungsinformation zu authentifizieren.

Die hier verwendete Basis-Authentifizierungsinformation kann dieselbe sein wie eine schon in der Getränkezubereitungsmaschine gespeicherte Authentifizierungsinformation, oder sie kann vom ersten Bediengerät an die Getränkezubereitungsmaschine übermittelt werden. Dies impliziert, dass die Berechtigung, welche in der Getränkezubereitungsmaschine dem ersten Bediengerät zugeordnet gespeichert ist, eine obere Berechtigung ist, und dass dies erfolgreich überprüft wurde, bevor die Übermittlung oder das Abspeichern in der Getränkezubereitungsmaschine zugelassen wird.

In Ausführungsformen sind die Basis-Authentifizierungsinformation und die Remote-Authentifizierungsinformation identisch, beispielsweise gleich einem gemeinsamen Schlüssel oder einem kryptographischen "Salz" (engl. "salt"), welches zum Erzeugen eines oder mehrerer Schlüssel verwendet wird.

In anderen Ausführungsformen sind die Basis-Authentifizierungsinformation und die Remote-Authentifizierungsinformation voneinander verschieden und sind die Basis für die Authentifizierung des zweiten Bediengerätes bei der Getränkezubereitungsmaschine. Beispielsweise können sie ein öffentlicher und ein korrespondierender geheimer Schlüssel eines "public-key"-Verschlüsselungsverfahrens sein.

In Ausführungsformen ist ein zweites Kommunikationsmedium, über welches das erste Bediengerät dem zweiten Bediengerät die Remote-Authentifizierungsinformation übermittelt, verschieden von einem ersten Kommunikationsmedium, über welches das erste Bediengerät mit der Getränkezubereitungsmaschine kommuniziert.

Damit kann verhindert werden, dass durch Abhören der Kommunikation über ein einziges Kommunikationsmedium ein Angreifer alle Informationen erhält, um sich als Benutzer auszugeben.

In Ausführungsformen übermittelt das erste Bediengerät die Remote-Authentifizierungsinformation dem zweiten Bediengerät über eine nur im Nahbereich wirkende Kommunikation, insbesondere durch eines von:
- Darstellen einer Zeichenkette auf einem Display des ersten Bediengerätes und manuelle Eingabe dieses Codes am zweiten Bediengerät;
- Darstellen eines visuellen Codes, beispielsweise eines Barcodes, auf einem Display des ersten Bediengerätes und optisches Scannen und Decodieren dieses Codes durch das zweite Bediengerät;
- einem Nahbereich-Funkprotokoll, beispielsweise Bluetooth oder NFC.

Der visuelle Code kann auch mittels einer zeitlich ändernden Helligkeit des Displays dargestellt werden.

In Ausführungsformen ist die Zuordnung einer Berechtigung zu einem Bediengerät realisiert, indem Bediengeräte der gleichen Berechtigung die gleiche (d.h. eine gemeinsame) Authentifizierungsinformation verwenden und dieser (gemeinsamen) Authentifizierungsinformation eine in der Getränkezubereitungsmaschine gespeicherte Berechtigung zugeordnet ist.

In diesem Fall repräsentiert die Authentifizierungsinformation die Tatsache, dass ein Bediengerät zu einer bestimmten Gruppe von Bediengeräten gehört, die alle die gleiche Berechtigung haben. Nachdem also die Getränkezubereitungsmaschine eine bestimmte Authentifizierungsinformation empfangen hat, kann damit eine in der Getränkezubereitungsmaschine gespeicherte und der Authentifizierungsinformation zugeordnete Berechtigung ermittelt werden. Diese Berechtigung gilt für alle Bediengeräte dieser Gruppe. Nach Massgabe dieser Berechtigung kann dann ermittelt werden, ob eine bestimmte Aktion oder ein Lese- oder Schreibzugriff in der Getränkezubereitungsmaschine durch das Bediengerät ausgelöst werden darf.

In Ausführungsformen ist die Zuordnung einer Berechtigung zu einem Bediengerät realisiert, indem jedes der Bediengeräte eine individuelle Authentifizierungsinformation verwendet und dieser individuellen Authentifizierungsinformation eine in der Getränkezubereitungsmaschine gespeicherte Berechtigung zugeordnet ist.

In diesem Fall repräsentiert die Authentifizierungsinformation die Tatsache, dass ein Bediengerät ein bestimmtes Individuum ist, beispielsweise mit einem eineindeutig zugeordneten Identifikator, und kein anderes Bediengerät mit der gleichen Authentifizierungsinformation existiert. Nachdem also die Getränkezubereitungsmaschine eine bestimmte Authentifizierungsinformation empfangen hat, kann damit eine in der Getränkezubereitungsmaschine und der Authentifizierungsinformation zugeordnete gespeicherte Berechtigung ermittelt werden. Diese Berechtigung gilt für genau dieses eine Bediengerät (Es können zwar andere, gleiche Berechtigungen existieren, jedoch ist deren Zuordnung zu einem Bediengerät mittels einer weiteren Zuordnung zwischen einem Bediengerät und einer Authentifizierungsinformation ausgedrückt). Nach Massgabe dieser Berechtigung kann dann ermittelt werden, ob eine bestimmte Aktion oder ein Lese- oder Schreibzugriff in der Getränkezubereitungsmaschine durch das Bediengerät ausgelöst werden darf.

In Ausführungsformen kann eine bestimmte Aktion in der Getränkezubereitungsmaschine, insbesondere der Herstellungsschritt, nur ausgelöst werden, wenn ein korrespondierender Auslösebefehl in einem Funknetzwerk empfangen wird, welches durch die Getränkezubereitungsmaschine selbst als Basisstation definiert wird. Die Getränkezubereitungsmaschine respektive deren Kommunikationseinheit bildet in diesem Fall also einen Wireless Access Point (" drahtloser Zugangspunkt" oder Basisstation) des Funknetzwerkes.

Die **Getränkezubereitungsmaschine** ist ausgebildet zur Ausführung des oben beschriebenen Verfahrens, soweit die beschriebenen Schritte auf der Getränkezubereitungsmaschine ausgeführt werden.

Das **Computerprogramm** dient zum Betrieb eines **Bediengerätes** zur Interaktion mit einem Benutzer und zur drahtlosen Kommunikation mit einer Kommunikationseinheit der Getränkezubereitungsmaschine. Das Computerprogramm führt bei Ausführung auf dem Bediengerät mindestens die folgenden Schritte zum Erstellen einer mittleren Berechtigung für ein zweites Bediengerät aus:
- Senden, an die Getränkezubereitungsmaschine, eines Befehls zum Erstellen einer mittleren Berechtigung mit einer zugeordneten Basis-Authentifizierungsinformation in der Getränkezubereitungsmaschine;
- Senden, an das zweite Bediengerät, eine Remote-Authentifizierungsinformation, welche dem zweiten Bediengerät erlaubt, sich bei der Getränkezubereitungsmaschine anhand der in der Getränkezubereitungsmaschine gespeicherten Basis-Authentifizierungsinformation zu authentifizieren.

Das Bediengerät weist eine Eingabevorrichtung und eine Ausgabevorrichtung auf, die als Touchscreen kombiniert sein können, sowie eine Datenverarbeitungseinheit und eine Kommunikationseinheit zur Kommunikation mit der Getränkezubereitungsmaschine. Das Bediengerät kann ein **mobiles, insbesondere ein tragbares** Gerät sein, beispielsweise ein Mobiltelefon oder Smartphone, oder ein funktional gleichwertiges Gerät wie eine Smartwatch oder ein "wearable computer". Das Bediengerät kann auch fest installiert sein, beispielsweise als Teil einer Gebäude-oder Küchenautomatisierungsanlage. Dank dem Bediengerät können Bedienungselemente, insbesondere die Eingabevorrichtung und Ausgabevorrichtung des Bediengerätes, und dessen Programmierbarkeit und Rechenleistung zur Ansteuerung der Getränkezubereitungsmaschine genutzt werden.

Das Bediengerät kann zur Ausführung mindestens eines Teiles des beschriebenen Verfahrens ausgebildet sein. Das Bediengerät kommuniziert über eine Kommunikationsverbindung mit der Getränkezubereitungsmaschine. Dabei werden typischerweise Daten an die Getränkezubereitungsmaschine übertragen, welche repräsentativ sind für eine Behälterauswahl oder ein Gesamtvolumen, absolute oder relative Mengenanteile und optional weitere Parameter von Teilprodukten, wie beispielsweise Temperatur, Reihenfolge der Zubereitung von Teilprodukten, Name des Getränkes, Name des Benutzers, Zubereitungshinweise und -empfehlungen, Kapselpräferenz. Weitere Daten können Bestätigungseingaben sein, welche dem System anzeigen, dass der Benutzer eine angezeigte Benutzeranweisung ausgeführt hat. Von der Getränkezubereitungsmaschine an das Bediengerät können anzuzeigende Initialwerte für Mengenanteile, Benutzeranweisungen etc. übermittelt werden.

In einer Ausführungsform weist das System eine **Zusatzeinheit** auf, welche sowohl zum Zuführen von Milch als zweitem Teilprodukt, optional unter Erwärmen der Milch, als auch zum Bilden und Zuführen von Milchschaum als drittem Teilprodukt zum Gesamtprodukt ausgebildet ist.

Das **Computerprogramm** zur Ausführung auf dem Bediengerät ist in einen internen Speicher einer digitalen Datenverarbeitungseinheit des Bediengerätes ladbar und weist Computerprogrammcodemittel auf, welche, wenn sie in der digitalen Datenverarbeitungseinheit des Bediengerätes ausgeführt werden, diese zur Ausführung der für das Bediengerät vorgesehenen Schritte des oben beschriebenen Verfahrens bringen. Ein Computerprogrammprodukt weist einen Datenträger, respektive ein computerlesbares Medium auf, auf welchem die Computerprogrammcodemittel gespeichert sind.

In Ausführungsformen ist die Getränkezubereitungsmaschine mit einer **Zuführeinheit** ausgerüstet, welche automatisch Portionspackungen zuführen und in die Kapselaufnahme fördern kann. Die Zuführeinheit kann zum selektiven Zuführen von Portionspackungen unterschiedlichen Typs ausgerüstet sein. Es ist damit eine automatische Herstellung von Gesamtprodukten unterschiedlicher Art möglich. Dabei kann bei der Herstellung des Gesamtproduktes nach Massgabe der Zubereitungsvorschrift automatisch eine passende respektive mit der Zubereitungsvorschrift konsistente Portionspackung zugeführt werden.

In weiteren Ausführungsformen mit einer solchen Zuführeinheit können in der Getränkezubereitungsmaschine mehrere Empfangsschritte mit jeweils einem Auslösebefehl und einer zugeordneten Zubereitungsvorschrift ausgeführt werden. Diese können gespeichert und nacheinander in separaten Herstellungsschritten abgearbeitet werden. Optional wird jeweils nach Abschluss eines Herstellungsschrittes ein Abschlussbestätigungsschritt zur Meldung an den Benutzer ausgeführt. Vor Ausführung der einzelnen Herstellungsschritte können jeweils die Überprüfungsschritte und Bestätigungsschritte durchgeführt werden. Es kann zwischen Herstellungsschritten auch eine Benutzeranweisung gesendet werden, um den Benutzer aufzufordern, vor dem Beginn eines Herstellungsschrittes einen eben gefüllten Behälter durch einen leeren zu ersetzen.

Weitere bevorzugte Ausführungsformen gehen aus den abhängigen Patentansprüchen hervor. Dabei sind Merkmale der Verfahrensansprüche sinngemäss mit den Geräte-und Computerprogrammansprüchen kombinierbar und umgekehrt.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: ein System zur Getränkezubereitung;
- Figuren 2-3: Flussdiagramme von Verfahren zum Betrieb der Getränkezubereitungsmaschine.

Grundsätzlich sind in den Figuren gleiche Teile mit gleichen Bezugszeichen versehen.

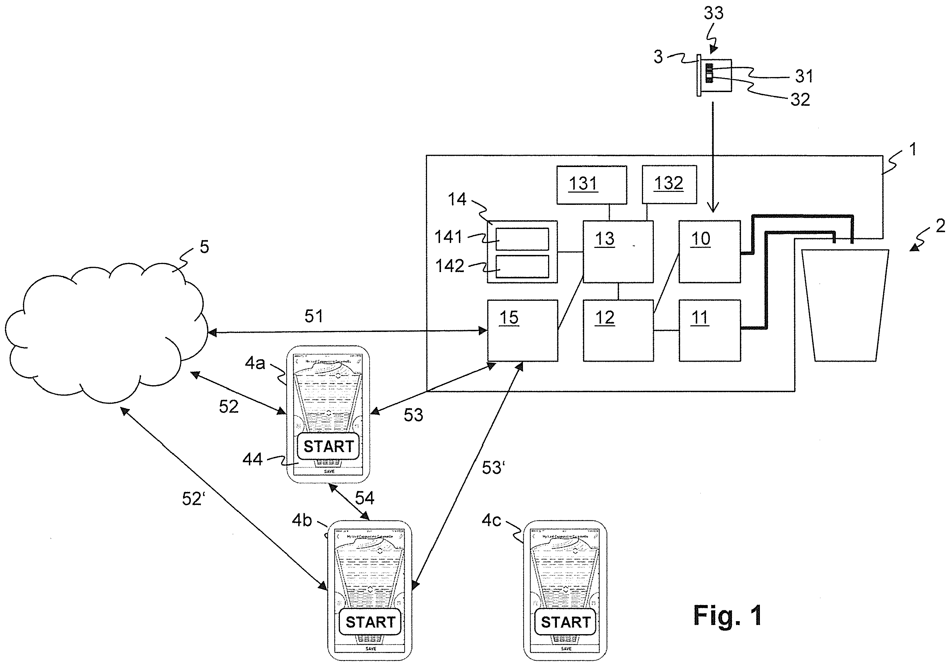

**Figur 1** zeigt ein **System** zur Getränkezubereitung mit einer Getränkezubereitungsmaschine 1 zum Befüllen eines Behälters 2 mit mindestens einem Extraktionsgut aus einer Portionspackung 3. Die Getränkezubereitungsmaschine 1 kann über eine erste Kommunikationsverbindung 51 mit einem Kommunikationsnetzwerk 5 wie einem Intranet oder dem Internet verbunden sein. Ein Bediengerät 4a, 4b, 4c, welches mobil und tragbar sein kann, beispielsweise ein Mobiltelefon oder Smartphone, oder ein dediziertes Gerät welches nur zur Bedienung der Getränkezubereitungsmaschine 1 vorgesehen ist, kann indirekt über eine zweite Kommunikationsverbindung 52, 52' und das Kommunikationsnetzwerk 5 oder direkt über eine dritte Kommunikationsverbindung 53, 53' mit der Getränkezubereitungsmaschine 1 kommunizieren. Zwei Bediengeräte 4a, 4b können über eine vierte Kommunikationsverbindung 54 miteinander kommunizieren, entweder bidirektional oder mindestens unidirektional, beispielsweise von einem ersten Bediengerät 4a zu einem zweiten Bediengerät 4b.

Die Getränkezubereitungsmaschine 1 weist eine **Grundeinheit** 10 zum Extrahieren eines **Extraktionsprodukts** mittels einer Extraktionsflüssigkeit auf. Die Getränkezubereitungsmaschine 1 ist beispielsweise eine Portionskapsel-Kaffeemaschine der an sich bekannten Art, wobei die Grundeinheit 10 ein Brühmodul und die Extraktionsflüssigkeit heisses und unter Druck stehendes Wasser ist. Das Extraktionsprodukt wird dem Behälter 2 zugeführt.

Die **Portionspackung** 3 weist eine Portionsverpackung (bspw. Kapsel) und ein in der Portionsverpackung enthaltenes Extraktionsgut (bspw. Kaffee) auf.

Die Getränkezubereitungsmaschine 1 weist eine **Zusatzeinheit** 11 auf, welche mindestens ein weiteres **Produkt** oder **Teilprodukt** fördern oder erzeugen kann, beispielsweise Milch und/oder Milchschaum, welche ebenfalls dem Behälter 2 zugeführt werden. Die Zusatzeinheit 11 kann Heizelemente und/oder Kühlelemente zum Aufheizen oder Abkühlen des mindestens einen weiteren Produktes aufweisen.

Das Extraktionsprodukt und das mindestens eine Teilprodukt werden gleichzeitig oder sequentiell dem Behälter 2 zugeführt und bilden zusammen im Behälter 2 ein Gesamtprodukt, beispielsweise einen "Caffe Macchiato" bestehend aus Kaffee, kalter oder warmer Milch, und kaltem oder warmem Milchschaum. Ein Gesamtprodukt ist schematisch als bestehend aus einem ersten Anteil 21, einem zweiten Anteil 22 und einem dritten Anteil 23 bestehend dargestellt. Die Anteile können je nach Zubereitungsvorschrift im Behälter 2 übereinander geschichtet oder gemischt sein. Unter "Anteil" wird ein Volumenanteil oder Mengenanteil verstanden.

Die Getränkezubereitungsmaschine 1 weist zur Steuerung der Grundeinheit 10 und der Zusatzeinheit 11, zur Bedienung durch einem Benutzer und zur optionalen Kommunikation mit anderen Geräten eine Steuereinheit 12, eine übergeordnete Steuereinheit 13, eine Bedieneinheit 14 und eine Kommunikationseinheit 15 auf.

Die **Steuereinheit** 12 ist zur Ansteuerung der Grundeinheit 10 und Zusatzeinheit 11 eingerichtet, beispielsweise indem sie die Pumpen Ventile, Heizelemente etc. dieser Einheiten ansteuert und Messwerte von Temperaturen, Drücken, Durchfluss etc. erfasst und verarbeitet. Die Funktion der Steuereinheit 12 kann durch eine einzige physische elektronische Einheit, beispielsweise einen Mikrokontroller, realisiert werden, oder durch mehrere physikalische Einheiten oder Mikrokontroller, welche jeweils der Grundeinheit 10 und der Zusatzeinheit 11 zugeordnet sind und miteinander über einen Kommunikationsbus kommunizieren oder über Signalleitungen einzelne analoge oder binäre Signale übermitteln.

Die **übergeordnete Steuereinheit** 13 ist zur Ansteuerung der Bedieneinheit 14 und er Kommunikationseinheit 15 eingerichtet. Die übergeordnete Steuereinheit 13 kann physikalisch und/oder programmtechnisch getrennt von der Steuereinheit 12 realisiert sein, oder aber zusammen mit der Steuereinheit 12 eine einzige Einheit bilden. In diesem Sinne können gemäss Ausführungsformen die Steuereinheit 12 und die übergeordnete Steuereinheit 13 identisch sein.

Die **Bedieneinheit** 14 weist eine Eingabeeinheit 141, mit beispielsweise Schaltern, Tastern und/oder einer Jog-Dial oder Einstellrad und/oder einer berührungsempfindlichen Fläche auf, sowie eine Ausgabeeinheit 142 mit optischen Anzeigemitteln wie Leuchten oder einem Bildschirm etc. und/oder akustischen Anzeigemitteln wie einem Lautsprecher, Summer, etc..

Die **Kommunikationseinheit** 15 ist zur Kommunikation über die erste Kommunikationsverbindung 51, die drahtlos (beispielsweise mittels Wi-Fi, Bluetooth, etc.) oder drahtgebunden (beispielsweise mittels Ethernet, USB) sein kann, eingerichtet, insbesondere zur Kommunikation mit dem Kommunikationsnetzwerk 5. Ferner kann die Kommunikationseinheit 15 drahtlos (beispielsweise mittels Wi-Fi, Bluetooth, NFC, etc.) oder drahtgebunden (beispielsweise mittels USB) mit dem Bediengerät 4 kommunizieren. Die Kommunikationseinheit 15 kann auch zum Auslesen und Beschreiben eines entfernbaren portablen Datenträgers eingerichtet sein, beispielsweise über eine USB-Schnittstelle oder SD-Kartenschnittstelle.

Es können eines oder mehrere Bediengeräte 4a, 4b, 4c vorliegen. Ein solches **Bediengerät** 4, typischerweise ein Mobiltelefon oder Smartphone, weist ein Benutzerinterface 44 auf, beispielsweise einen berührungsempfindlichen Bildschirm oder Touchscreen, welcher als Ein- und Ausgabeeinheit funktioniert. Zusätzlich oder alternativ können auch Taster des Bediengerätes 4 als Eingabeeinheiten dienen. Zusätzlich oder alternativ kann eine Spracheingabe realisiert sein.

Wo nicht anders erwähnt, können Informationen an den Benutzer und Eingaben des Benutzers über die Bedieneinheit 14 und/oder das Bediengerät 4 ausgegeben respektive eingegeben werden. Wenn in der vorliegenden Beschreibung also Interaktionen mit dem Benutzer beschrieben sind, versteht sich, dass damit Ausgaben respektive Eingaben mittels der Bedieneinheit 14 und/oder mittels des Bediengerätes 4 gemeint sind. Verallgemeinert können diese daher als Interfaceeinheit bezeichnet werden.

Die übergeordnete Steuereinheit 13 weist einen Speicher 131 auf, in welchem unter anderem **Zubereitungsvorschriften** oder Rezepte gespeichert sind. Eine Zubereitungsvorschrift weist mindestens **Steuerinformationen** auf, die in Befehle zur Steuerung der Grundeinheit 10 und der Zusatzeinheit 11 umgesetzt werden können. Solche Steuerinformationen weisen einerseits **Ablaufinformationen** auf, welche einen Ablauf von Schritten spezifizieren, die durch die Grundeinheit 10 und/oder die Zusatzeinheit 11 zum Erzeugen eines Gesamtprodukte auszuführen sind. Andererseits weisen die Steuerinformationen beispielsweise Temperaturen, Volumenangaben, Zeitangaben, etc. auf - im Folgenden allgemein auch **Zubereitungsparameter** genannt - welche einen Ablauf parametrisieren.

Ablaufinformationen repräsentieren beispielsweise "Heizung der Zusatzeinheit einschalten; Pumpe des Brühmoduls während fünfzehn Sekunden einschalten; nach Abschalten der Pumpe mindestens fünf Sekunden warten bis Heizung auf Solltemperatur ist; Milchpumpe während zwölf Sekunden einschalten". Die in diesem Beispiel erwähnten Zeiten und Temperaturen können durch Zubereitungsparameter spezifiziert sein und/oder durch die Steuerung nach Massgabe von andern Zubereitungsparametern und Sensormesswerten bestimmt werden.

Eine Zubereitungsvorschrift kann auch **Benutzeranweisungen** enthalten. Diese Anweisungen sind Teil der Zubereitung des Gesamtproduktes und müssen durch einen Benutzer ausgeführt werden. Dazu können die Benutzeranweisungen mittels der Ausgabeeinheit 142 oder des Benutzerinterface 44 des Bediengerätes 4 angezeigt werden. Beispielsweise sind solche Benutzeranweisungen "Jetzt Eiswürfel hinzufügen" oder "Bitte 20ml Karamelsirup abmessen" oder "Jetzt den vorbereiteten Karamelsirup hinzufügen" oder "Bitte umrühren" oder "Bitte überprüfen, ob eingelegte Kapsel und angewähltes Rezept zusammenpassen" etc. Eine Benutzeranweisung kann von einer visuellen Darstellung begleitet sein, beispielsweise des herzustellenden Gesamtproduktes, einer ausgewählten oder einer tatsächlich eingelegten Kapsel etc.

**Zur Zubereitung eines Produktes** werden entsprechend der Zubereitungsvorschrift Steuerinformationen respektive entsprechende Befehle durch die Grundeinheit 10 und Zusatzeinheit 11 umgesetzt und damit ein Zubereitungsablauf realisiert. Falls Zubereitungsvorschrift Benutzeranweisungen aufweist, werden diese an entsprechenden Stellen des Ablaufs dem Benutzer angezeigt. Nach einer Quittierung durch den Benutzer mittels der Eingabeeinheit 141 oder dem Benutzerinterface 44, welche dem System die Ausführung der Benutzeranweisung bestätigt, werden nachfolgende Steuerinformationen des Zubereitungsablaufs umgesetzt.

Eine Zubereitungsvorschrift kann Zubereitungsparameter aufweisen, die durch den Benutzer angepasst werden dürfen, sowie Zubereitungsparameter, die nicht durch den Benutzer anpassbar sind. **Anpassbare Zubereitungsparameter** sind beispielsweise (Volumen)Anteile von Teilprodukten im Gesamtprodukt, eine Gesamtmenge, oder die Temperatur eines Teilproduktes. Für anpassbare Zubereitungsparameter kann die Zubereitungsvorschrift einen Standardwert oder Defaultwert enthalten, welcher verwendet wird, wenn der Benutzer den Parameter nicht anpasst.

Zur Anpassung von anpassbaren Zubereitungsparametern wird dem Benutzer auf der Bedieneinheit 14 der Getränkezubereitungsmaschine 1 oder dem Benutzerinterface 44 des Bediengerätes 4 eine Auswahl eines oder mehrere solcher Zubereitungsparameter angezeigt und wird eine Eingabe des Benutzers zur Anpassung des Zubereitungsparameters erfasst. Die Eingabe kann durch Betätigen von realen Tastern und/oder von virtuellen Tastern wie Schaltflächen oder "Buttons", insbesondere "Pfeiltasten" und/oder von verschiebbaren Markierungen oder "Slider" auf einem Touchscreen der Bedieneinheit 14 oder des Bediengerätes 4 erfolgen.

Das Bediengerät 4 übermittelt Informationen, welche die erfassten Benutzereingaben wie Mengenanteile, Wahl des Behälters oder Gesamtmenge, Temperaturwahl etc. repräsentieren, direkt über die dritte Kommunikationsverbindung 53 oder indirekt über die zweite Kommunikationsverbindung 52 und die erste Kommunikationsverbindung 51 an die Getränkezubereitungsmaschine 1.

Die Portionspackung 3 ist mit einem maschinenlesbaren Portionencode 33 versehen. Dieser kann durch beispielsweise optisch, mechanisch oder drahtlos über Funk lesbare Informationsträger realisiert sein, oder durch eine Kombination von zwei oder mehr solcher Informationsträger. Der Portionencode 33 repräsentiert eine Portionenkategorie 31, welche eine Kategorie spezifiziert, welcher die Portionspackung 3 zugeordnet ist. Solche Kategorien können verschiedene Kategorien von Getränken oder Produkten sein, wie "Espresso", "Normalkaffee", "Filterkaffee", "Tee", und auch "Reinigungskapsel". Der Portionencode 33 repräsentiert ferner eine Portionenidentität 32, welcher die Portionspackung 3 zugeordnet ist. Solche Identitäten können bestimmte Einzelprodukte oder Sorten repräsentieren, wie "Arabica Nr. 42" oder "Colombia special". Portionspackungen 3 mit derselben Portionenkategorie 31 können unterschiedliche Portionenidentitäten 32 aufweisen. Mittels der Portionenkategorie 31 können also Portionspackungen 3 respektive entsprechende Produkte unterschiedlicher Identität zu Kategorien gruppiert werden.

Es kann in der Getränkezubereitungsmaschine 1 eine Zuordnung des Portionencodes 33, respektive von Portionenkategorien 31 und/oder Portionenidentitäten 32, zu jeweils empfohlenen oder zulässigen Bereichen für Zubereitungsparameter gespeichert sein. Damit kann nach dem Einlegen einer Portionspackung 3 anhand des Portionencodes 33 automatisch geprüft werden, ob die Portionspackung 3 mit den vom Benutzer vorgegebenen Mengenanteilen kompatibel ist und/oder ob die Portionspackung 3 mit einer vom Benutzer gewählten Zubereitungsvorschrift konsistent ist, also nicht für diese Zubereitungsvorschrift geeignet ist. Ist dies nicht der Fall, kann eine Warnung angezeigt werden und/oder die weitere Verarbeitung der Portionspackung 3 gestoppt werden. Alternativ kann auch eine positive Meldung generiert werden, wenn die gewählte Kapsel sich für die gewählten Mengenanteile besonders gut eignet. Beispielsweise ist eine Espresso-Kapsel nicht optimal geeignet, wenn durch den Benutzer eine für einen normalen Kaffee vorgesehene Kaffeemenge gewählt wurde. Auch sind eine Reinigungskapsel oder eine Teekapsel grundsätzlich nicht geeignet, wenn die Zubereitung eines Getränkes mit Milch gewählt wurde.

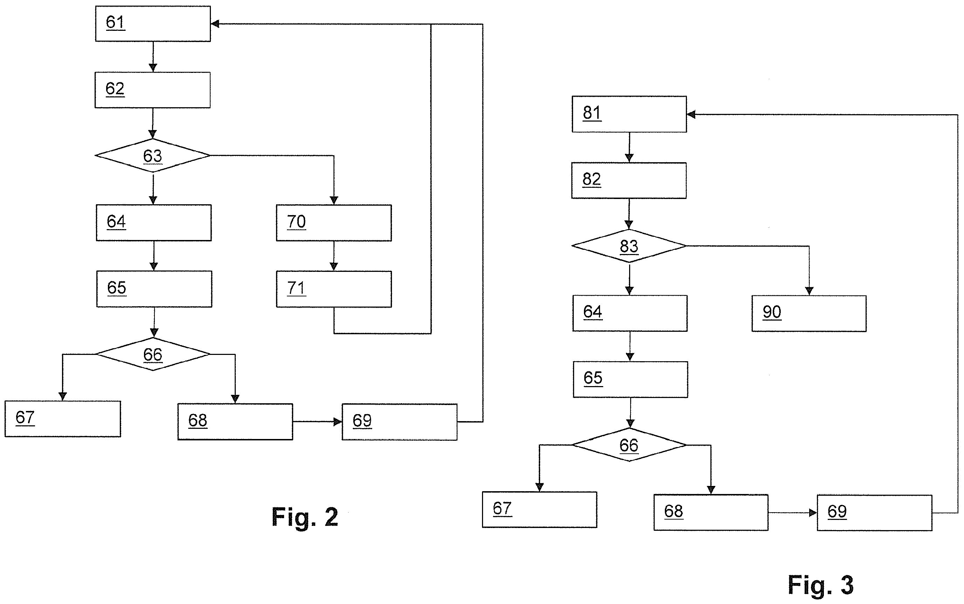

**Figur 2** zeigt ein Flussdiagramm eines Ablaufs eines Verfahrens zum Betrieb der Getränkezubereitungsmaschine 1. Diese Verfahren stellt die Ausführbarkeit eines Herstellungsprozesses sicher. Wo nichts anders angegeben ist, werden die Schritte durch die Getränkezubereitungsmaschine selber ausgeführt. Die Schritte sind die Folgenden:
- Empfangsschritt 61: eine drahtlose Kommunikationseinheit 15 der Getränkezubereitungsmaschine 1 empfängt einen Auslösebefehl.
- Überprüfungsschritt 62: es wird überprüft, ob die Getränkezubereitungsmaschine 1 zum Herstellen des Gesamtproduktes bereit ist.
- Verzweigung 63, je nachdem, ob die Getränkezubereitungsmaschine 1 bereit ist oder nicht.
- **Falls** die Getränkezubereitungsmaschine 1 bereit ist:
   - Bestätigungsschritt 64 zum Senden, durch die Kommunikationseinheit 15, einer Bestätigung, dass der Auslösebefehl empfangen wurde und die Getränkezubereitungsmaschine 1 zum Herstellen des Gesamtproduktes bereit ist;
   - Herstellungsschritt 65, in welchem die Herstellung des Gesamtproduktes durch die Getränkezubereitungsmaschine 1 stattfindet;
   - Zweite Verzweigung 66, je nachdem, ob die Herstellung fehlerfrei verlaufen ist.
   - **Falls** die Herstellung fehlerfrei verlaufen ist,
      - Abschlussbestätigungsschritt 67, in welchem durch die Kommunikationseinheit 15, eine Abschlussbestätigung gesendet wird, dass das Herstellen des Gesamtproduktes abgeschlossen ist. Das Bediengerät 4 erzeigt eine entsprechende Anzeige für den Benutzer. Die Implementation des Abschlussbestätigungsschrittes 67 kann in verschiedener Weise geschehen, beispielsweise durch ein "push"-Verfahren, in welchem die Getränkezubereitungsmaschine 1 aktiv eine Nachricht an das Bediengerät 4 sendet, oder mittels eines "polling"-Verfahrens, in welchem das Bediengerät 4 den Status der Getränkezubereitungsmaschine 1 wiederholt abfragt.
   - **Falls** die Herstellung **nicht** fehlerfrei verlaufen ist,
      - Herstellungsfehlermeldungsschritt 68, in welchem durch die Kommunikationseinheit 15, eine Herstellungsfehlermeldung gesendet wird, dass beim Herstellen des Gesamtproduktes ein Fehler aufgetreten ist. Die Herstellungsfehlermeldung kann Informationen über die Art des Fehlers und/oder dessen Behebung enthalten oder auf solche Informationen verweisen, die beispielsweise im Bediengerät 4 gespeichert sind und angezeigt werden.
      - Herstellungsfehlerbehebungsschritt 69, in welchem durch einen Benutzer anhand der Herstellungsfehlermeldung eine Fehlerbehebung vorgenommen werden kann.
      - Weiterführung des Verfahrens mit dem Empfangsschritt, nachdem der Benutzer mittels der Bediengerät 4 erneut einen Auslösebefehl gesendet hat.
- **Falls** die Getränkezubereitungsmaschine 1 **nicht** bereit ist:
   - Fehlerinformationsschritt 70 in welchem durch die Kommunikationseinheit 15, eine Fehlerinformation gesendet wird, mit einer Bestätigung, dass der Auslösebefehl empfangen wurde aber die Getränkezubereitungsmaschine 1 zum Herstellen des Gesamtproduktes **nicht** bereit ist. Die Fehlerinformation hängt von der Art des Überprüfungsschrittes ab, der dies festgestellt hat. Sie kann sich auf das Fehlen von Komponenten und/oder einer Zusatzeinheit beziehen, oder auf einen Betriebszustand der Getränkezubereitungsmaschine oder auf Inkonsistenzen zwischen Zubereitungsvorschrift und dem aktuellen Zustand der Getränkezubereitungsmaschine.
   - Fehlerbehebungsschritt 71, in welchem durch einen Benutzer anhand der Fehlerinformation eine Fehlerbehebung und/oder eine Anpassung der Zubereitungsvorschrift vorgenommen werden kann.
   - Weiterführung des Verfahrens mit dem Empfangsschritt, nachdem der Benutzer mittels der Bediengerät 4 erneut einen Auslösebefehl gesendet hat.

**Figur 3** zeigt ein Flussdiagramm eines Ablaufs eines Verfahrens zum Betrieb der Getränkezubereitungsmaschine 1. Diese Verfahren stellt die Autorisierung zur Ausführung eines Herstellungsprozesses sicher. Wo nichts anders angegeben ist, werden die Schritte durch die Getränkezubereitungsmaschine selber ausgeführt. Die Schritte sind die Folgenden:
- Empfangsschritt 81: eine drahtlose Kommunikationseinheit 15 der Getränkezubereitungsmaschine 1 empfängt einen Auslösebefehl und zugeordnete Authentifizierungsinformation. Die Authentifizierungsinformation kann als Schlüssel übermittelt werden. Alternativ kann die Authentifizierungsinformation durch ein mehrschrittiges Verfahren unter Austausch von Nachrichten zwischen der Getränkezubereitungsmaschine 1 und einem Bediengerät 4 ermittelt werden.
- Überprüfungsschritt 82: es wird anhand der Authentifizierungsinformation überprüft, ob der Auslösebefehl von einem Bediengerät 4a, 4b, 4c stammt, welches zum Auslösen dieser bestimmten Aktion in der Getränkezubereitungsmaschine 1, insbesondere dem Fern-Auslösen einer Herstellung berechtigt ist. Beispielsweise geschieht dies, indem anhand der Authentifizierungsinformation eine in der Getränkezubereitungsmaschine 1 gespeicherte Berechtigung ermittelt wird, welche spezifiziert, ob eine bestimmte Aktion, insbesondere das Auslösen eines Herstellungsschrittes, ausgelöst werden darf.
- Verzweigung 83, je nachdem, ob das Bediengerät 4a, 4b, 4c berechtigt ist oder nicht.
- **Falls** das Bediengerät 4a, 4b, 4c berechtigt ist:
   - Bestätigungsschritt 64 (optional), Herstellungsschritt 65, und nachfolgende Schritte, wie bereits bezüglich Fig. 2 beschrieben.
- **Falls** das Bediengerät 4a, 4b, 4c **nicht** berechtigt ist:
   - Berechtigungsfehlerschritt 90 in welchem durch die Kommunikationseinheit 15, eine Fehlerinformation gesendet wird, dass der Auslösebefehl empfangen wurde aber das Bediengerät 4a, 4b, 4c zum Auslösen dieser bestimmten Aktion, insbesondere dem Fern-Auslösen der Herstellung, **nicht** bereit ist. Diese Fehlerinformation kann am Bediengerät 4 angezeigt werden.

Die Verfahren gemäss den **Figuren 2** und **3** können miteinander kombiniert werden. Beispielsweise werden aus **Figur 2**
- der Überprüfungsschritt 62, ob die Getränkezubereitungsmaschine 1 zum Herstellen des Gesamtproduktes bereit ist und
- die anschliessende Verzweigung 63,
in die **Figur 3** zwischen
- die Verzweigung 83 und
- den Bestätigungsschritt 64 (optional) oder den Herstellungsschritt 65 eingefügt.

Es können unterschiedliche Stufen von Berechtigungen vorliegen. Beispielsweise ist in der Konfiguration der Figur 1 dem ersten Bediengerät 4a eine obere Berechtigung (oder "Administrator-Berechtigung") zugeordnet, welche erlaubt, einen Herstellungsvorgang in der Getränkezubereitungsmaschine 1 auszulösen. Das dritte Bediengerät 4c hat diese Berechtigung nicht, sondern nur eine "untere Berechtigung" oder "User-Berechtigung". Mit dieser können Zubereitungsvorschriften (Rezepte) angepasst und an die Getränkezubereitungsmaschine 1 übermittelt werden, das Auslösen der Herstellung muss aber an der Getränkezubereitungsmaschine 1 selber stattfinden, d.h. durch Betätigen eines Bedienungselementes an der Bedieneinheit 14 der Getränkezubereitungsmaschine 1. Damit kann sichergestellt werden, dass nicht ein beliebiger Benutzer unkontrolliert einen Herstellungsprozess auslösen kann.

Dem zweiten Bediengerät 4b kann eine mittlere Berechtigung (oder "Sub-Administrator") zugeordnet sein. Diese mittlere Berechtigung erlaubt das Auslösen der Herstellung eines Produktes durch dieses zweite Bediengerät 4b.

Die Zuordnung einer mittleren Berechtigung zu einem Bediengerät 4 kann nur mittels eines Bediengerätes 4 geschehen, welchem eine obere Berechtigung zugordnet ist. Das erste Bediengerät 4a mit der oberen Berechtigung kann somit einem anderen, beispielsweise dem zweiten Bediengerät 4b, eine mittlere Berechtigung zuordnen. Dies kann realisiert werden, indem das erste Bediengerät 4a dem zweiten Bediengerät 4b einen Schlüssel oder allgemein eine Authentifizierungsinformation zuordnet, wobei dieser Authentifizierungsinformation im Getränkezubereitungsmaschine 1 eine mittlere Berechtigung zugeordnet ist. Diese Authentifizierungsinformation wird dem zweiten Bediengerät 4b vom ersten Bediengerät 4a übermittelt. Vorzugsweise geschieht dies, zur Abhörsicherheit, über die vierte Kommunikationsverbindung 54, welche einen anderen Kanal ist, als der Kanal, über welchen die Bediengeräte 4 mit der Getränkezubereitungsmaschine 1 kommunizieren. Dieser andere Kanal ist vorzugsweise auf eine Übermittlung nur im Nahbereich ausgelegt, beispielsweise gemäss einem NFC-Standard oder Bluetooth-Standard, im Gegensatz zu einem WiFi-Standard zur Kommunikation mit der Getränkezubereitungsmaschine 1. Der andere Kanal kann auch unidirektional sein, beispielsweise durch ein optisches Signal wie ein Barcode oder Morsecode, der vom ersten Bediengerät 4 ausgegeben und vom zweiten Bediengerät 4b empfangen respektive gescannt wird.

Die Authentifizierungsinformation, welche der zweiten Bediengerät 4b zugeordnet ist, kann für jedes der Bediengeräte 4 eineindeutig sein:
- Entweder als Kombination eines gemeinsamen Administratorschlüssels mit einer individuellen Identifikationsschlüssel, der jeweils nur das Bediengerät 4 identifiziert aber nicht einer Berechtigung entspricht. Dann kann zum Bestimmen der Berechtigung zum Auslösen eines Herstellungsprozesses in der Getränkezubereitungsmaschine 1 untersucht werden, ob der Administratorschlüssel für die Getränkezubereitungsmaschine 1 gültig ist. Zum Bestimmen, ob ein Bediengerät 4a eine obere Berechtigung aufweist, wird dann der Identifikationsschlüssel verwendet. Beim Einrichten einer Getränkezubereitungsmaschine 1 kann festgelegt werden, dass ausschliesslich das erste Bediengerät 4a, das zum Einrichten verwendet wird, diese obere Berechtigung aufweist. Dann kann zum Vergeben einer mittleren Berechtigung nur der Administratorschlüssel an das zweite Bediengerät 4b übermittelt werden. Das zweite Bediengerät 4b kann somit, weil es eine anderen Identifikationsschlüssel als das erste aufweist, keine obere Berechtigung haben und kann keine Berechtigungen modifizieren.
- Oder es kann ein kombinierter Schlüssel vorliegen, welcher sowohl die Identität als auch die Berechtigung eines Bediengerätes 4 codiert. Dann ist in der Getränkezubereitungsmaschine 1 jedem solchen kombinierten Schlüssel eine Berechtigung zugeordnet, welche die Berechtigung zum Auslösen eines Herstellungsprozesses und auch jene zum Vergeben von (mittleren) Berechtigungen an andere Bediengeräte 4 angibt. Dann wird beim Vergeben einer mittleren Berechtigung der kombinierte Schlüssel dem zweiten Bediengerät 4b übermittelt, und in der Getränkezubereitungsmaschine 1 die Zuordnung des kombinierten Schlüssels mit einer mittleren Berechtigung gespeichert.

Allgemein gilt, dass die verschiedenen Schlüssel oder Authentifizierungsinformation nicht vom ersten Bediengerät 4a aus gesendet und in diesem erzeugt werden müssen. Relevant ist, dass die Authentifizierungsinformationen geteilt werden. Dabei wird das Erzeugen eines Schlüsselpaares aus einem privaten und einem öffentlichen Schlüssel auch als "Teilen der Authentifizierungsinformationen" bezeichnet.

Die Übermittlung von Authentifizierungsinformation kann, unter Verwendung entsprechender kryptographischer Verfahren auch über ein öffentliches Kommunikationsnetzwerk 5 geschehen.

## Patentansprüche

1. Verfahren zum Betrieb einer Getränkezubereitungsmaschine (1), zur Herstellung eines Gesamtproduktes unter Verwendung einer Portionspackung (3), wobei die Getränkezubereitungsmaschine (1) eine zur drahtlosen Kommunikation ausgebildete Kommunikationseinheit (15) aufweist, und wobei das Verfahren mindestens die folgenden durch die Getränkezubereitungsmaschine (1) ausgeführten Schritte aufweist:
• einen Empfangsschritt (81) zum Empfangen, durch die Kommunikationseinheit (15), eines Auslösebefehls zum Auslösen einer bestimmten Aktion in der Getränkezubereitungsmaschine (1), und von Authentifizierungsinformation;
• einen Überprüfungsschritt (82) zum Überprüfen, anhand der Authentifizierungsinformation, ob der Auslösebefehl von einem Bediengerät (4a, 4b, 4c) stammt, welches zum Auslösen dieser bestimmten Aktion in der Getränkezubereitungsmaschine (1), insbesondere dem Fern-Auslösen einer Herstellung berechtigt ist;
und, nur im Falle, dass das Bediengerät dazu berechtigt ist:
• Ausführen der Aktion, insbesondere eines Herstellungsschritts (85) zum Herstellen des Gesamtproduktes.

2. Verfahren gemäss Anspruch 1, wobei die Getränkezubereitungsmaschine (1) zur drahtlosen Kommunikation mit mehreren Bediengeräten (4a, 4b, 4c) konfigurierbar ist, wobei diesen Bediengeräten unterschiedliche Berechtigungen zugeordnet sind, und Aktionen der Getränkezubereitungsmaschine (1) durch ein Bediengerät (4) nach Massgabe der diesem Bediengerät (4) zugeordneten Berechtigung auslösbar oder nicht auslösbar sind.

3. Verfahren gemäss Anspruch 2, wobei der Überprüfungsschritt (82) die folgenden in der Getränkezubereitungsmaschine (1) durchgeführten Schritte aufweist:
• Ermitteln, anhand der Authentifizierungsinformation, einer Berechtigung, welche dieser Authentifizierungsinformation zugeordnet ist;
• Überprüfen, ob diese Berechtigung das Auslösen der bestimmten Aktion, insbesondere das Fern-Auslösen einer Herstellung, zulässt.

4. Verfahren gemäss einem der Ansprüche (2) bis (3), wobei mindestens eine obere Berechtigung und ein untere Berechtigung in der Getränkezubereitungsmaschine (1) gespeichert sind, und die Getränkezubereitungsmaschine (1) zum Ausführen von Maschinen-Aktionen mittels Aktuatoren der Getränkezubereitungsmaschine (1) vorgesehen ist, wobei
• nur die obere Berechtigung beinhaltet, dass **mindestens eine** Maschinen-Aktion, insbesondere ein Herstellungsschritt, ausgelöst werden darf;
• die untere Berechtigung beinhaltet, dass **keine** Maschinen-Aktion, insbesondere ein Herstellungsschritt, ausgelöst werden darf.

5. Verfahren gemäss Anspruch 4, wobei zusätzlich mindestens eine mittlere Berechtigung in der Getränkezubereitungsmaschine (1) speicherbar ist, und wobei
• nur die obere Berechtigung auch beinhaltet, dass eine Aktion zum neu Erstellen oder zum Ändern einer mittleren Berechtigung ausgelöst werden darf;
• die mittlere Berechtigung beinhaltet, dass **mindestens eine** Maschinen-Aktion, insbesondere ein Herstellungsschritt, ausgelöst werden darf;

6. Verfahren gemäss Anspruch 5, wobei beim Erstellen einer mittleren Berechtigung diese zusammen mit einer zugeordneten Authentifizierungsinformation in der Getränkezubereitungsmaschine (1) gespeichert wird.

7. Verfahren gemäss Anspruch 6, wobei durch ein erstes Bediengerät (4a) das Erstellen einer mittleren Berechtigung für ein zweites Bediengerät (4b) durchgeführt wird, wobei die folgenden Schritte ausgeführt werden:
• das erste Bediengerät (4a) kommuniziert mit der Getränkezubereitungsmaschine (1) respektive deren Kommunikationseinheit (15) und löst in der Getränkezubereitungsmaschine (1) das Erstellen einer mittleren Berechtigung aus, wobei dieser mittleren Berechtigung in der Getränkezubereitungsmaschine (1) eine Basis-Authentifizierungsinformation zugeordnet wird;
• das erste Bediengerät (4a) übermittelt dem zweiten Bediengerät (4b) eine Remote-Authentifizierungsinformation, welche dem zweiten Bediengerät (4b) erlaubt, sich bei der Getränkezubereitungsmaschine (1) anhand der in der Getränkezubereitungsmaschine (1) gespeicherten Basis-Authentifizierungsinformation zu authentifizieren.

8. Verfahren gemäss Anspruch 7, wobei ein zweites Kommunikationsmedium, über welches das erste Bediengerät (4a) dem zweiten Bediengerät (4b) die Remote-Authentifizierungsinformation übermittelt, verschieden ist von einem ersten Kommunikationsmedium, über welches das erste Bediengerät (4a) mit der Getränkezubereitungsmaschine (1) kommuniziert.

9. Verfahren gemäss Anspruch 7 oder 8, wobei das erste Bediengerät (4a) die Remote-Authentifizierungsinformation dem zweiten Bediengerät (4b) übermittelt über eine nur im Nahbereich wirkende Kommunikation, insbesondere durch eines von:
• Darstellen einer Zeichenkette auf einem Display des ersten Bediengerätes (4a) und manuelle Eingabe dieses Codes am zweiten Bediengerät (4b);
• Darstellen eines visuellen Codes, beispielsweise eines Barcodes, auf einem Display des ersten Bediengerätes (4a) und optisches Scannen und Decodieren dieses Codes durch das zweite Bediengerät (4b);
• einem Nahbereich-Funkprotokoll, beispielsweise Bluetooth oder NFC.

10. Verfahren gemäss einem der Ansprüche 2 bis 9, wobei die Zuordnung einer Berechtigung zu einem Bediengerät (4) realisiert ist, indem Bediengeräte (4) der gleichen Berechtigung die gleiche Authentifizierungsinformation verwenden und dieser Authentifizierungsinformation eine in der Getränkezubereitungsmaschine (1) gespeicherte Berechtigung zugeordnet ist.

11. Verfahren gemäss einem der Ansprüche 2 bis 9, wobei die Zuordnung einer Berechtigung zu einem Bediengerät (4) realisiert ist, indem jedes der Bediengeräte (4) eine individuelle Authentifizierungsinformation verwendet und dieser individuellen Authentifizierungsinformation eine in der Getränkezubereitungsmaschine (1) gespeicherte Berechtigung zugeordnet ist.

12. Verfahren gemäss einem der vorangehenden Ansprüche, wobei eine bestimmte Aktion in der Getränkezubereitungsmaschine (1), insbesondere der Herstellungsschritt, nur ausgelöst werden kann, wenn ein korrespondierender Auslösebefehl in einem Funknetzwerk empfangen wird, welches durch die Getränkezubereitungsmaschine (1) selbst als Basisstation definiert wird.

13. **Getränkezubereitungsmaschine** (1), ausgebildet zur Ausführung des Verfahrens gemäss einem der **Ansprüche 1 bis 6.**

14. **Computerprogramm** zum Betrieb eines **Bediengerätes** (4a) zur Interaktion mit einem Benutzer und zur drahtlosen Kommunikation mit einer Kommunikationseinheit (15) der Getränkezubereitungsmaschine (1) gemäss Anspruch 13, wobei das Computerprogramm bei Ausführung auf dem Bediengerät (4a) mindestens die folgenden Schritte zum Erstellen einer mittleren Berechtigung für ein zweites Bediengerät (4b) ausführt:
• Senden, an die Getränkezubereitungsmaschine (1), eines Befehls zum Erstellen einer mittleren Berechtigung mit einer zugeordneten Basis-Authentifizierungsinformation in der Getränkezubereitungsmaschine (1);
• Senden, an das zweite Bediengerät (4b), eine Remote-Authentifizierungsinformation, welche dem zweiten Bediengerät (4b) erlaubt, sich bei der Getränkezubereitungsmaschine (1) anhand der in der Getränkezubereitungsmaschine (1) gespeicherten Basis-Authentifizierungsinformation zu authentifizieren.
